# EUROPÄISCHE PATENTSCHRIFT

(11) **EP 1 421 766 B1**
(45) Veröffentlichungstag und Bekanntmachung des Hinweises auf die Patenterteilung: **21.10.2015**
(21) Anmeldenummer: 02754478.2
(22) Anmeldetag: 01.08.2002
(51) Int. Cl.: H04L 29/12, H04L 29/06

(54) **VORABAUSHANDLUNG VON NAT-ADRESSEN**
PRE-NEGOTIATION OF NAT ADDRESSES
PRE-NEGOCIATION D'ADRESSES NAT

(30) Priorität: 30.08.2001 DE 10142500
(43) Veröffentlichungstag der Anmeldung: 26.05.2004
(73) Patentinhaber: Unify GmbH & Co. KG, 81379 München (DE)
(72) Erfinder: KLAGHOFER, Karl, 81373 München (DE); MÜLLER, Harald, 82205 Gilching (DE); TOTZKE, Jürgen, 85586 Poing (DE); VOLKMANN, Gerald, 81825 München (DE)
(74) Vertreter: Fritzsche, Thomas
(86) Internationale Anmeldenummer: PCT/DE2002/002840
(87) Internationale Veröffentlichungsnummer: WO 2003/028340

(56) Entgegenhaltungen:
- WO-A-02/23822
- BRUSTOLONI J C; GARAY J A: "Application-independent End-to-End Security in Shared-Link Access Networks" PROCEEDINGS OF THE NETWORKING 2000 CONFERENCE, IFIP, PARIS, FRANCE; LECTURE NOTES IN COMPUTER SCIENCE, Bd. 1815, Mai 2000 (2000-05), Seiten 608-619, XP001148130
- THERNELIUS F: "SIP, NAT, and Firewalls" MASTER THESIS, Mai 2000 (2000-05), Seiten 1-69, XP002209773
- BROWN UNIVERSITY COLLEGE LONDON I: "Securing prioritised emergency traffic; draft-brown-ieps-sec-00.txt", 20010705, 5 July 2001 (2001-07-05), XP015011179, ISSN: 0000-0004
- GAMMA B ET AL: "SECURITY FEATURES REQUIRED IN AN NGN", ELECTRICAL COMMUNICATION, ALCATEL. BRUSSELS, BE, no. 2, 1 April 2001 (2001-04-01), pages 129-133, XP001065324, ISSN: 0013-4252
- "VOICE ROUTE SERVER HYDING THE ORGINATOR AND DESTINATOR", RESEARCH DISCLOSURE, MASON PUBLICATIONS, HAMPSHIRE, GB, no. 432, 1 April 2000 (2000-04-01), page 802, XP000968985, ISSN: 0374-4353

## Beschreibung

Die Erfindung betrifft ein Verfahren zur paketorientierten Übermittlung von Sprach-, Audio- Video und/oder Nutzdaten zwischen einem internen Datennetz und einem öffentlichen Datennetz sowie eine Anordnung zur Durchführung dieses Verfahrens.

Verfahren der in Rede stehenden Art werden heute in breitem Umfang zur Übermittlung von Sprach-, Audio-, Video- und/oder Nutzdaten über Netzwerkgrenzen, z. B. zwischen internen und öffentlichen Datennetzen, hinweg eingesetzt. Bei der Übermittlung von Daten über IP-Netze treten immer wieder Probleme auf, wenn an einer Netzwerkgrenze eine Adreßumsetzung mit NAT (Network Adress Translation) erfolgt. NAT ist dabei aus verschiedenen Gründen von wesentlicher Bedeutung für die Internettechnologie. Neben der Bereitstellung einer Lastverteilung im Parallel-Processing werden verschiedene Arten von Zugangssicherungen im Sinne eines Firewalls sowie Fehlertoleranz und Hochverfügbarkeit unterstützt. Weiterhin werden grundlegende Funktionen der Netzwerkadministration vereinfacht.

Da der in den Gründungsjahren des Internet vorgesehene Adreßraum für die Vergabe von IP-Adressen auf absehbare Zeit nicht mehr ausreichen wird, insbesondere der Ausbau von internen und hochkomplexen Datennetzen mehr und mehr IP-Adressen erfordert, wird NAT aber vor allem eingesetzt, um die intern benutzten IP-Adressen nach außen zu verbergen. Dies macht zum einen die Verwaltung interner Netze einfacher, zum anderen werden Kosten gespart, da man nach außen weniger öffentliche kostenpflichtige IP-Adressen benutzen muß als man intern wirklich gebraucht. Im Prinzip ist es dabei theoretisch möglich, ein internes lokales Netz von bis zu 60000 Rechnern auf eine einzige öffentliche IP-Adresse abzubilden, indem man die Portadresse der öffentlichen IP-Adresse variiert.

Bei NAT wird zunächst beim Versenden eines IP-Datenpakets der IP-Header dieses Pakets ausgetauscht. Die interne IP-Adresse inklusive Portnummer wird durch eine öffentliche IP-Adresse mit einer anderen Portnummer ersetzt. Ein NAT-Host speichert die Zuordnung (Mapping) von interner IP-Adresse auf die öffentliche (externe) IP-Adresse. Empfängt nun der NAT-Host ein IP-Datenpaket, so bildet er die öffentliche (externe) IP-Adresse wieder:auf die interne IP-Adresse ab. Der NAT-Host ist dabei als ein zwei Netzwerke miteinander verbindender Rechner zu verstehen, auf welchem eine entsprechende Software (NAT-Engine) für die Adreßumsetzung sorgt.

Problematisch ist allerdings, daß einige IP-Protokolle die internen IP-Adressen als Protokolldaten noch einmal mitschicken (z. B. bei Voice-over-IP-Protokollen). Am NAT-Host werden nur die IP-Header eines Datenpakets ausgetauscht, nicht aber auf die Protokölldaten selbst zugegriffen, da diese vom NAT-Host nicht auflösbar sind. Der adressierte externe Rechner im öffentlichen Netz schickt nun seine Antwort nicht zu der öffentlichen Adresse im IP-Header des Datenpäkets, sondern zu der internen IP-Adresse, die der verwendete Dienst (z. B. Voice-over-IP) aus den Protokolldaten herausgelesen hat. Unter dieser Adresse ist der ursprüngliche Sender jedoch nicht erreichbar. Damit geht die Antwort entweder einer unbekannten IP-Adresse oder einem anderen öffentlichen Rechner zu, der mit diesem IP-Datenpaket nichts anfangen kann.

Das hier geschilderte Problem wurde bislang noch nicht gelöst.

In WO 02/23822 A1 ist zwar ein Verfahren zur Erleichterung der Peer-zu-Peer-Anwendungskommunikation zur Lösung dieses Problems beschrieben, das jedoch nur zum Stand der Technik nach Artikel 54(3) EPÜ gehört.

Zwar gibt es vereinzelte Ansätze, direkt auf dem NAT-Host einen Protokoll-Analyzer einzusetzen, welcher in der Lage :ist, bestimmte Protokolle auszupacken und hier neben dem IP-Header auch die Protokolldaten entsprechend der NAT-Zuordnung (Mapping) zu verändern. Dieser regelmäßige Zugriff auf Protokolldaten sowie deren Analyse würden allerdings den Datenverkehr nicht unerheblich verlangsamen. Außerdem müßten je nach eingesetztem Protokolltyp möglicherweise nicht nur ein, sondern mehrere Protokoll-Analyzer eingesetzt werden. Künftig könnte durch IPv6 (Internet Protocol Version 6 - mit erweitertem IP-Adreßraum) das Problem gelöst werden, aber IPv6 wird noch lange nicht durchgängig implementiert sein. Durch das erheblich gestiegene Interesse der Firmen an Internet-Telefonie und den Austausch von Bild- und Nutzdaten ist allerdings eine rasche und sichere Lösung der geschilderten Problematik von Nöten.

In Brustoloni J.C.; Garay J.A.: "Application-independent End-to-End Security in Shared-Link Access Networks", Proceedings of the Networking 2000 Conference, IFIP, Paris, France; Lecture Notes in Computer Science, Bd. 1815, Mai 2000, Seiten 608-619, XP 001148130, wird eine Anwendung mit IPSec (Internet Protocol Security) offenbart, die eine gesicherte Kommunikation über potentiell unsichere IP-Netze wie das Internet ermöglichen soll.

Weiterhin werden in Brown University College London I: "Securing prioritised emergency traffic; draft-brown-ieps-sec-00.txt", 5. Juli 2001, ISSN: 0000-0004, XP 015011179, ITU-Empfehlungen zu Sicherheitsvorschriften von prioritären Kommunikationsverbindungen für Notfälle gegeben.

Aufgabe der vorliegenden Erfindung ist es, ein Verfahren nach Anspruch 1 bereitzustellen, welches unter Beibehaltung bestehender NAT-Konfigurationen den Aufbau transparenter Verbindungen für komplexere Protokolle (Sprach-, Audio-, Video- und/oder Nutzdaten) über einen NAT-Host ermöglicht. Es ist weiterhin Aufgabe der vorliegenden Erfindung, eine Anordnung zur Durchführung des erfindungsgemäßen Verfahrens gemäß Anspruch 2 bereitzustellen.

Ein Kerngedanke des erfindungsgemäßen Verfahrens besteht darin, auf der einen Seite die Nutzung von komplexeren Protokollen (z. B. Voice-over-IP) in unverändertem Umfang so zu unterstützen, daß die Probleme bei der Adressierung von Rechnern im öffentlichen IP-Netz, welche allein durch den Einsatz von NAT entstehen, gelöst werden. Dies wird bei der paketorientierten Übermittlung von Sprach-, Audio-, Video- und/oder Nutzdaten zwischen einem internen und einem öffentlichen Datennetz durch eine Vorab-Reservierung von NAT-Adressen ermöglicht, wobei zunächst eine Anfrage eines internen Rechners an einen NAT-Adreßserver zum Bereitstellen einer Vorab-NAT-Adresse zu einer IP-Adresse des internen Rechners gesandt wird. Diese Vorab-NAT-Adresse zur IP-Adresse des internen Rechners wird durch den NAT-Adreßserver zugeordnet. Der aktuelle Zuordnungsdatensatz zwischen der Vorab-NAT-Adresse und der IP-Adresse des internen Rechners wird vom NAT-Adreßserver schließlich an einen NAT-Host gesandt. Damit liegt am NAT-Host, welcher als Schnittstellenrechner (Gateway) zwischen dem internen und dem öffentlichen Datennetz fungiert, der aktuelle Zuordnungsdatensatz zum Abändern von Herkunfts- bzw. Zielangaben im Kopf eines Datenpaketes (IP-Header) vor. Im nächsten Schritt wird die Vorab-NAT-Adresse des internen Rechners von dem NAT-Adreßserver an den internen Rechner gesandt. Am Rechner wird diese Vorab-NAT-Adresse von dem entsprechenden Dienst (z. B. Voice-over-IP) als Absenderadresse in die Protokolldaten eines Datenpakets eingebracht. Von dem internen.Rechner wird nun ein Datenpaket, insbesondere mit Voice-over-IP-Protokolldaten, welche als Voice-over-IP-Adresse nunmehr die Vorab-NAT-Adresse enthalten, an den NAT-Host gesandt. Auf diesem kann im nächsten Schritt eine Herkunftsangabe im Kopf des Datenpakets (IP-Header), welche die IP-Adresse des internen Rechners enthält, gegen die zugeordnete Vorab-NAT-Adresse ausgetauscht werden. Damit liegen sowohl in den Protokolldaten des Datenpakets wie auch in der Herkunftsangabe im Kopf desselben einheitliche Adressen (Vorab-NAT-Adressen) für eine transparente Nutzung des Datenpakets im internen wie im öffentlichen Datennetz vor. Das Datenpaket wird schließlich durch den NAT-Host an einen extern adressierten Rechner weitergeleitet.

Der Vorteil dieser Lösung besteht darin, daß sich der NAT-Host um die Protokolldaten nicht mehr kümmern muß. Der oder die internen Rechner (Clients) können den NAT-Server kontaktieren, um ihre zukünftige NAT-Adresse schon im Vorfeld zu erfahren. Diese wird beim Zusammenstellen der Protokolldaten berücksichtigt. Der externe Rechner im öffentlichen Datennetz erhält nun in den Protokolldaten die korrekte Antwortadresse, welche dann dem NAT-Host zugeht und dieser die Rückantwort korrekt dem internen Rechner zustellen kann. Der NAT-Host wird zudem entlastet, da er nun nicht selbst das Datenpaket entsprechend dem verwendeten Protokoll auspacken muß, sondern wie herkömmlich nur die Herkunftsangabe im Kopf des Datenpakets (IP-Header) austauscht.

Vorteilhafte Weiterbildungen des erfindungsgemäßen Verfahrens sind in den Unteransprüchen 2 und 3 angegeben.

Bevorzugt wird das Datenpaket mit der Vorab-NAT-Adresse von dem extern adressierten Rechner durch den NAT-Host empfangen. Dieser kann im nächsten Schritt durch Austauschen einer Zielangabe im Kopf des Datenpakets (IP-Header), welche der Vorab-NAT-Adresse entspricht, gegen die zugeordnete IP-Adresse des internen Rechners unter Verwendung des aktuellen Zuordnungsdatensatzes austauschen. Im nächsten Schritt wird dann das Datenpaket durch den NAT-Host an den intern adressierten Rechner weitergeleitet. Ein besonderer Vorteil entsteht dadurch, daß das üblicherweise durchgeführte Austauschen der Zielangabe im Kopf des Datenpakets (IP-Header) von dem extern adressierten Rechner im üblichen Rahmen unverändert beibehalten werden kann. Dadurch, daß nun aber transparente Adressen in der Zielangabe im Kopf des Datenpaketes (IP-Header) und in den mit diesem Datenpaket transportierten Protokolldaten vorliegen, ist eine Fehlleitung des Datenpakets ausgeschlossen.

Bevorzugt erfragt der NAT-Host den aktuellen Zuordnungsdatensatz beim NAT-Adreßserver, bevor der eigentliche Austausch der Zielangabe im Kopf des Datenpakets (IP-Header) des externen Rechners durchgeführt wird. Dadurch wird eine Doppeltvergabe von Vorab-NAT-Adressen an Datenpakete, welche nicht das Resultat einer Anfrage aus dem internen in das öffentliche Netz hinein sind, vermieden. Der Austausch der Zielangabe im Kopf eines vom öffentlichen in das interne Netz geschickten Datenpakets (IP-Header) kann dann unter Berücksichtigung des aktuellen Zuordnungsdatensatzes schon vergebener IP-Adressen durchgeführt werden.

Die Aufgabe der vorliegenden Erfindung wird weiterhin durch eine Anordnung zum Durchführen des erfindungsgemäßen Verfahrens gelöst.

Dabei wird, zusätzlich zu einem NAT-Host, welcher wenigstens ein internes Datennetz mit einem öffentlichen Datennetz verbindet und wenigstens einem internen Rechner, welcher über den NAT-Host mit einem öffentlichen Rechner kommuniziert oder kommunizieren kann, ein NAT-Adreßserver bereitgestellt, welcher mit dem internen Rechner und dem NAT-Host in Verbindung steht oder in Verbindung treten kann, und welcher zum Ermitteln und Zuordnen von Vorab-NAT-Adressen zur IP-Adresse eines internen Rechners dient.

Das Ermitteln von Vorab-NAT-Adressen schließt dabei die Verwaltung (Hinzufügung, Aktualisierung, Löschung) der schon vergebenen Zuordnungen mit ein, um eine Doppeltvergabe von Vorab-NAT-Adressen zu IP-Adressen von internen Rechnern zu vermeiden. Unter einer Adresse (Vorab-NAT-Adresse, IP-Adresse) wird hier grundsätzlich die IP-Nummer (z. B. 141.23.209.105) zusammen mit einer Portnummer (z. B. 1245) verstanden. Da die IP-Nummer des NAT-Hosts immer gleich ist, wird die Zuordnung der Vorab-NAT-Adresse über die Vergabe einer Portnummer zur IP-Nummer des NAT-Hosts gelöst, welche schließlich die IP-Adresse (IP-Nummer und Portnummer) des internen Rechners referenziert.

Vorteilhafte Weiterbildungen der erfindungsgemäßen Anordnung gemäß Anspruch 2 sind in den Ansprüchen 3 und 4 angegeben.

Bevorzugt läuft dabei der NAT-Adreßserver zusammen mit dem NAT-Host auf einem gemeinsamen Rechner ab. Der NAT-Host kann dabei Funktionalitäten eines Gatekeepers wie Adreßumsetzung, Zugangskontrolle, Bandbreitenkontrolle, usw. von Multimediadiensten wahrnehmen. Durch die enge Kopplung des NAT-Hosts und seinen speziellen Diensten mit dem NAT-Adreßserver auf einem gemeinsamen Rechner werden insbesondere Kommunikationsprotokolle über das Datennetz vermieden. Der NAT-Adreßserver kann dem entsprechend schnell benutzte bzw. freie IP-Adressen vom NAT-Host erfragen, bevor eine Zuordnung zu IP-Adressen interner Rechner vorgenommen wird.

Von besonderem Vorteil ist auch, wenn standardisierte Protokolle, insbesondere SIP (Session Initiation Protocol) oder H.323, zur Übermittlung von Sprach-, Audio- und/oder Videodatenpaketen über Netzwerkverbindungen genutzt werden. Diese Protokolle bieten im Zusammenhang mit der erfindungsgemäßen Anordnung Mechanismen für Rufweiterleitung, Rufsignalsisierung, Aufnahme unterstützender Daten, Medienkontrolle und ergänzender Dienste. Dabei ist H.323 ein bewährtes Protokoll, welches insbesondere wegen seiner Benutzungsfreundlichkeit, Verläßlichkeit und Interoperabilität mit PSTN (Public Switched Telephone Network) genutzt wird. SIP ist ein neues Protokoll, welches Skalierbarkeit, Flexibilität und leichte Implementierbarkeit beim Aufbau komplexer Systeme garantiert.

Die Erfindung wird im folgenden anhand eines Ausführungsbeispiels näher erläutert. Es zeigen:
Fig. 1 eine erfindungsgemäße Anordnung zur paketorientierten Übermittlung von Sprach-, Audio-, Video- und/oder Nutzdaten zwischen einem internen Datennetz A und einem öffentlichen Datennetz B gemäß dem Stand der Technik und
Fig. 2 eine erfindungsgemäße Anordnung zur paketorientierten Übermittlung von Sprach- Audio-, Video- und/oder Nutzdaten zwischen einem internen Datennetz A und einem öffentlichen Datennetz B.

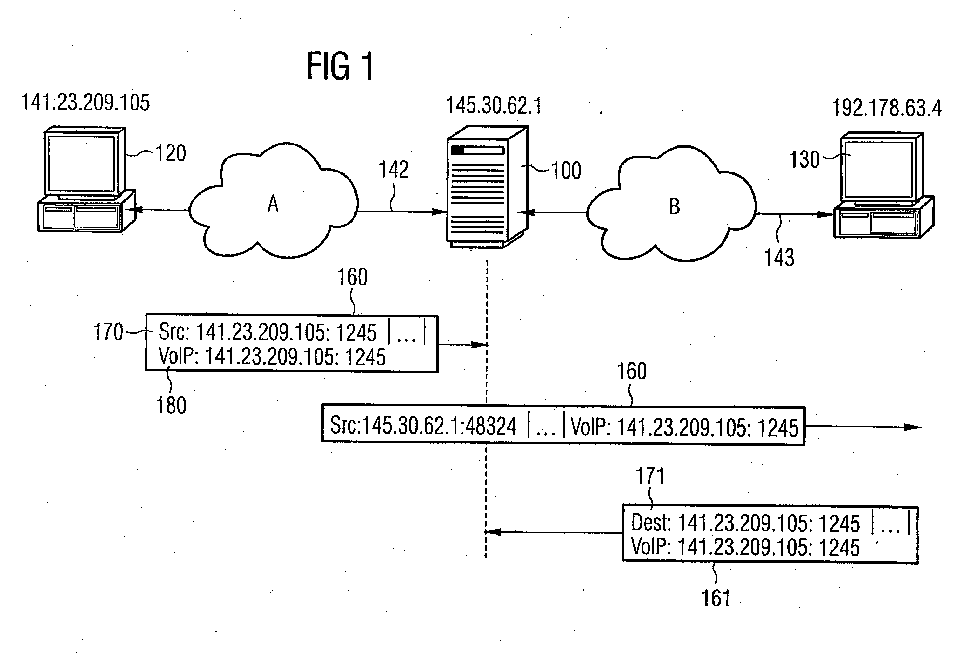

Zur Verdeutlichung der von der Erfindung gelösten Problematik wird in Fig. 1 in einer Anordnung gemäß dem Stand der Technik die Problematik noch einmal erläutert. Dabei verbindet ein NAT-Host 100 mit der IP-Nummer 145.30.62.1 ein internes Datennetz A mit einem öffentlichen Datennetz B. Ein Rechner 120 mit der IP-Nummer 141.23.209.105 steht über den NAT-Host 100 mit einem weiteren Rechner 130 mit der IP-Nummer 192.178.63.4 in Verbindung. Beim Aufbau einer Kommunikation zwischen den Rechnern 120, 130 wird zunächst ein Datenpaket 160 über eine Netzwerkverbindung 142 von dem internen Rechner 120 an den NAT-Host 100 gesandt. Als Herkunftsangabe 170 des Datenpaketes wird die IP-Adresse (bestehend aus IP-Nummer und Portnummer) des Rechners 120, nämlich 141.23.209.105:1245 verwandt. In den Protokolldaten findet sich die von dem auf dem Rechner 120 laufenden spezifischen Dienst verwendete Voice-over-IP-Adresse 180, welche identisch mit der IP-Adresse des Rechners 120 ist, wieder.

Auf dem NAT-Host 100 wird nun die Herkunftsangabe des Datenpakets 160, also die IP-Adresse 141.23.209.105:1245 des Rechners 120 durch die öffentlich sichtbare IP-Nummer 145.30.62.1 des NAT-Host 100 zusammen mit einer zugeordneten Portnummer, nämlich 48324 ersetzt. Über diese Portnummer 48324 kann eine Zuordnung (Mapping) der geänderten Herkunftsangabe zur ursprünglichen Herkunftsangabe, also der IP-Adresse 141.23.209.105:1245 des Rechners 120 vorgenommen werden. Bei dieser Änderung der Herkunftsangabe des Datenpakets 160 bleibt allerdings die Voice-over-IP-Adresse 180 weiterhin 141.23.209.105:1245 und damit gleich der ursprünglichen IP-Adresse des Rechners 120.

Dieses Datenpaket 160 wird über die Netzwerkverbindung 143 an den Rechner 130 weitergeleitet. Dieser Rechner 130 wiederum empfängt die Nachricht und verwendet für den Verbindungsaufbau die von dem entsprechenden Dienst, hier Voice-over-IP, in den Protokolldaten des Datenpakets 160 vorliegende Voice-over-IP-Adresse. Damit aber wird das zurückgeschickte Datenpaket 161 des Rechners 130 an die ursprüngliche IP-Adresse des Rechners 120 adressiert. Mit der Zielangabe 171 des Datenpakets 161, also der IP-Adresse 141.23.209.105:1245, geht die Antwort damit entweder zu einer unbekannten IP-Adresse oder zu einem anderen öffentlichen Rechner, der mit diesem Datenpaket nichts anfangen kann. Die geschilderte Problematik besteht also darin, daß am NAT-Host 100 eine Adreßumsetzung stattfindet, welche zwar die Herkunfts- 170 bzw. Zielangabe 171 (den IP-Header) des Datenpakets 160 bzw. 161 verändert, die relevante Voice-over-IP-Adresse 180 für den verwendeten Voice-over-IP-Dienst aber unberührt läßt. Gerade dieser Dienst adressiert aber in der Zielangabe 171 des rückkehrenden Datenpaketes 161 die IP-Adresse, welche für den Dienst in den für ihn bestimmten Protokolldaten hinterlegt war.

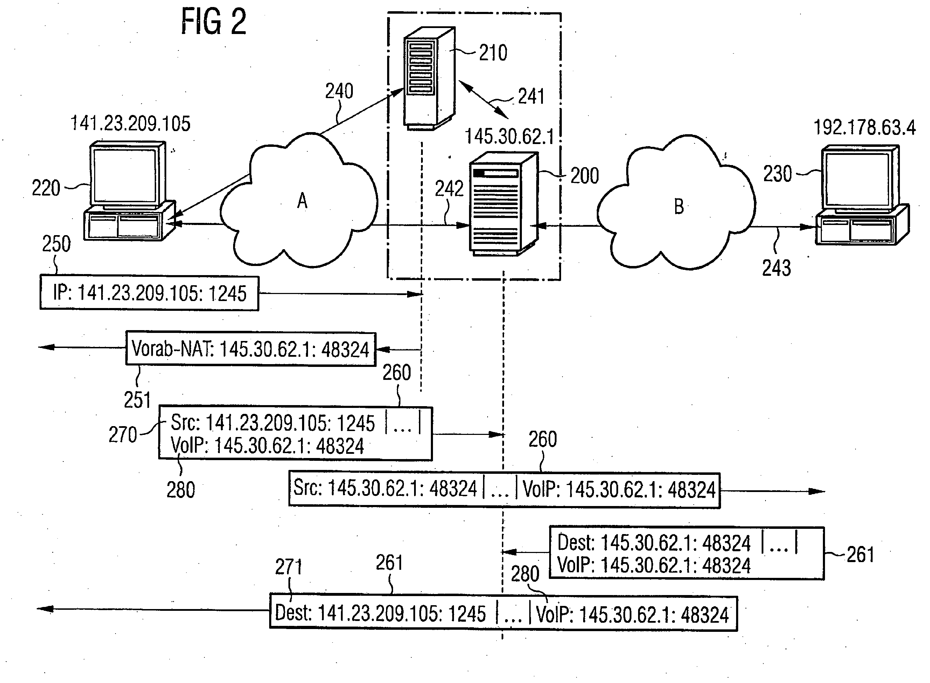

In Fig. 2 ist nun eine erfindungsgemäße Anordnung dargestellt, bei der wiederum ein NAT-Host 200 ein internes Datennetz A mit einem öffentlichen Datennetz B verbindet. Der NAT-Host 200 mit der IP-Nummer 145.30.62.1 kommuniziert bidirektional mit einem NAT-Adreßserver 210, wobei NAT-Host 200 und NAT-Adreßserver 210 mit einem internen Rechner 220 mit der IP-Nummer 141.23.209.105 über Netzwerkverbindungen 240 bzw. 242 in Verbindung stehen. NAT-Host und NAT-Adreßserver können auch auf einem gemeinsamen Rechner laufen, sind hier aber zur Verdeutlichung des Funktionsprinzips der erfindungsgemäßen Anordnung getrennt dargestellt. Der Rechner 220 steht über den NAT-Host 200 mit einem weiteren Rechner 230 mit der IP-Nummer 192.178.63.4 in Verbindung.

Um die vorab geschilderte Problematik auszuschließen, sendet der Rechner 220 über die Netzwerkverbindung 240 zunächst eine Anfrage an den NAT-Adreßserver 210, ihm zu seiner IP-Adresse 250, in diesem Fall 141.23.209.105:1245, eine Vorab-NAT-Adresse 251 zuzuordnen. Der NAT-Adreßserver 210 bestimmt zunächst eine noch nicht zugeordnete Vorab-NAT-Adresse 251, welche er schließlich über die Netzwerkverbindung 240 dem Rechner 220 zukommen läßt. Die Vorab-NAT-Adresse im vorliegenden Ausführungsbeispiel lautet 145.30.62.1:48324. Über die Portnummer 48324 der Vorab-NAT-Adresse läßt sich somit eine Zuordnung (Mapping) zu der IP-Adresse 141.23.209.105:1245 des Rechners 220 vornehmen. Die IP-Nummer 145.30.62.1 der Vorab-NAT-Adresse 251 entspricht der IP-Nummer des NAT-Hosts 200, welche nach außen in das öffentliche Netz B sichtbar ist.

Im nächsten Schritt sendet der Rechner 220 schließlich ein Datenpaket 260 an den NAT-Host 200, in dessen Protokolldaten sich die zugeteilte Vorab-NAT-Adresse 145.30.62.1:48324 als Voice-over-IP-Adresse 280 wiederfindet. Die Herkunftsangabe 270 im Kopf des Datenpakets (IP-Header) 260 lautet dagegen auf die IP-Adresse des Rechners 220, nämlich 141.23.209.105:1245. Auf dem NAT-Host 200 wird wiederum eine Adreßumsetzung der Herkunftsangabe 270 des Datenpakets vorgenommen, bei der die IP-Adresse des Rechners 220 gegen die vom NAT-Adreßserver 210 zugeteilte Vorab-NAT-Adresse 145.30.62.1:48324. Diese aktuelle Zuordnung der Vorab-NAT-Adresse zu der IP-Adresse des Rechners 220 (Mapping) wird dem NAT-Host 200 nach der Vergabe der Vorab-NAT-Adresse durch den NAT-Adreßserver 210 über die Netzwerkverbindung 241 mitgeteilt oder vom NAT-Host 200 erfragt. Die IP-Adresse des internen Rechners 220 kann nunmehr über die Zuordnung der Portnummer 48324 zu der IP-Adresse des internen Rechners 220, nämlich 141.23.209.105:1245 zurückverfolgt werden.

In einem weiteren Schritt wird von dem NAT-Host 200 das Datenpaket 260 an den externen Rechner 230 über die Netzwerkverbindung 243 gesandt. Der dort verwendete Dienst Voice-over-IP nutzt die in den Protokolldaten zu findende Voice-over-IP-Adresse 280, welche nunmehr der Vorab-NAT-Adressen 251 entspricht, als Zielangabe 271 zur Rücksendung des Datenpakets 261. Diese Zielangabe 271 lautet nun auf 145.30.62.1:48324.

Diese adressiert den NAT-Host 200, wo auf Basis der aktuellen Zuordnung die Zielangabe 271 im Kopf des Datenpakets (IP-Header) 261 gegen die tatsächliche IP-Adresse des im Rechners 220, also die Vorab-NAT-Adresse 145.30.62.1:48324 gegen die IP-Adresse 141.23.209.105:1245 ausgetauscht wird. Damit kann das Datenpaket 261 vom NAT-Host 200 dem Rechner 220 zugeordnet und an diesen versandt werden.

In den Protokolldaten wird für den Voice-over-IP-Verbindungsaufbau insbesondere das Protokoll H.323 oder SIP verwendet. Damit ist mit der erfindungsgemäßen Anordnung zur Durchführung des Verfahrens grundsätzlich auch die Kommunikation zwischen einem oder mehreren internen Rechnern (Multipoint-Connection) und einem oder mehreren externen Rechnern auf Basis von Sprach-, Audio-, Video- und/oder Nutzdaten gewährleistet.

## Patentansprüche

1. Verfahren zur paketorientierten Übermittlung von Sprachdaten und optional Audio-, Video- und/oder Nutzdaten zwischen einem internen Datennetz (A) und einem öffentlichen Datennetz (B), mit folgenden Verfahrensschritten:
a) Senden einer Anfrage eines internen Multimedia-Rechners (220) an einen NAT-Adress-Server (210) (NAT: Network Adress Translation) zum Bereitstellen einer Vorab-NAT-Adresse (251) zu einer IP-Adresse (250) (IP: Internet Protocol) des internen Multimedia-Rechners (220);
b) Zuordnen einer Vorab-NAT-Adresse (251) zur IP-Adresse des internen Multimedia-Rechners (220) durch den NAT-Adress-Server (210);
c) Senden eines aktuellen Zuordnungs-Datensatzes zwischen der Vorab-NAT-Adresse (251) und der IP-Adresse des internen Multimedia-Rechners (220) vom NAT-Adress-Server (210) an einen NAT-Host (200);
d) Senden der Vorab-NAT-Adresse (251) des internen Multimedia-Rechners (220) von dem NAT-Adress-Server (210) an den internen Multimedia-Rechner (220);
e) Senden eines Datenpakets (260) mit Voice-over-IP-Protokolldaten, welche als Voice-over-IP-Adresse die Vorab-NAT-Adresse (251) enthalten, vom internen Multimedia-Rechner (220) an den NAT-Host (200);
f) Austauschen einer Herkunftsangabe (270) im Kopf des Datenpakets (260), welche die IP-Adresse des internen Multimedia-Rechners (220) enthält, durch den NAT-Host gegen die zugeordnete Vorab-NAT-Adresse (251);
g) Weiterleiten des Datenpakets durch den NAT-Host (200) an einen extern adressierten Rechner (230);
h) Empfangen eines Datenpakets (261) mit der Vorab-NAT-Adresse (251) von dem extern adressierten Rechner (230) durch den NAT-Host (200) ;
i) Abfragen des aktuellen Zuordnungs-Datensatzes vom NAT-Host (200) gegen den NAT-Adress-Server (210);
j) Austauschen einer Zielangabe (271) im Kopf des Datenpakets (IP-Header) (261), welche die Vorab-NAT-Adresse (251) enthält, gegen die zugeordnete IP-Adresse (250) des internen Multimedia-Rechners (220) unter Verwendung des aktuellen Zuordnungs-Datensatzes durch den NAT-Host (200);
k) Weiterleiten des Datenpakets (261) durch den NAT-Host (200) an den intern adressierten Multimedia-Rechner (220).

2. Verfahren nach Anspruch 1,
**gekennzeichnet durch** die Verwendung standardisierter Protokolle, insbesondere SIP oder H.323, zur Übermittlung von Sprach-, Audio- und/oder Video-Datenpaketen über Netzwerkverbindungen (240,241,242,243).

3. Anordnung mit einem NAT-Host (200), einem internen Multimedia-Rechner (220) und einem NAT-Adress-Server (210) zum Durchführen des Verfahrens nach Anspruch 1 oder 2.

4. Anordnung nach Anspruch 3,
**dadurch gekennzeichnet, daß** der NAT-Adress-Server (210) zusammen mit dem NAT-Host (200) auf einem gemeinsamen Rechner abläuft.

## Claims

1. Method for packet-oriented transmission of voice data and optionally audio, video and/or useful data between an internal data network (A) and a public data network (B), with the following process steps:
a) transmitting a request of an internal multimedia computer (220) to a NAT address server (210) (NAT: Network Address Translation) for making available an advance NAT address (251) to an IP address (250) (IP: Internet Protocol) of the internal multimedia computer (220);
b) allocating an advance NAT address (251) to the IP address of the internal multimedia computer (220) through the NAT address server (210);
c) sending a current allocation data set between the advance NAT address (251) and the IP address of the internal multimedia computer (220) of the NAT address server (210) to a NAT hose (200);
d) sending the advance NAT address (251) of the internal multimedia computer (220) from the NAT address server (210) to the internal multimedia computer (220);
e) sending a data packet (260) with voice-over-IP protocol data, which contains the advance NAT address (251) as voice-over IP address, from the internal multimedia computer (220) to the NAT host (200);
f) exchanging a source indication (270) in the header of the data packet (260), which contains the IP address of the internal multimedia computer (220), via the NAT host against the associated advance NAT address (251),
g) forwarding the data packet via the NAT host (200) to an externally addressed computer (230);
h) receiving a data packet (261) with the advance NAT address (251) from the externally addressed computer (230) via the NAT host (200);
i) retrieving the current allocation data set from the NAT host (200) against the NAT address server (210);
j) exchanging a target indication (271) in the header of the data packet (IP header) (261), which contains the advance NAT address (251), against the associated IP address (250) of the internal multimedia computer (220) using the current allocation data set via the NAT host (200);
k) forwarding the data packet (261) via the NAT host (200) to the internally addressed multimedia computer (220).

2. Method according to Claim 1,
**characterized by** the use of standardized protocols, in particular SIP or H.323, for transmitting voice, audio and/or video data packets via network connections (240, 241, 242, 243).

3. Arrangement with a NAT host (200), an internal multimedia computer (220) and a NAT address server (210) for carrying out the method according to Claim 1 or 2.

4. Arrangement according to Claim 3,
**characterized in that** the NAT address server (210) is implemented together with the NAT host (200) on the same computer.

## Revendications

1. Procédé de transmission par paquets de données vocales et optionnellement de données audio, vidéo et/ou utiles entre un réseau de données interne (A) et un réseau de données public (B), comportant les étapes de procédé suivantes :
a) l'envoi d'une demande d'un ordinateur multimédia interne (220) à un serveur d'adresse NAT (210) (NAT : Network Adress Translation, traduction d'adresse réseau) pour la mise à disposition d'une préadresse NAT (251) à une adresse IP (250) (IP : Internet Protocol, protocole Internet) de l'ordinateur multimédia interne (220) ;
b) l'attribution d'une préadresse NAT (251) à l'adresse IP de l'ordinateur multimédia interne (220) par le serveur d'adresse NAT (210) ;
c) l'envoi d'un jeu de données d'attribution actuel entre la préadresse NAT (251) et l'adresse IP de l'ordinateur multimédia interne (220) par le serveur d'adresse NAT (210) à un hôte NAT (200) ;
d) l'envoi de la préadresse NAT (251) de l'ordinateur multimédia interne (220) par le serveur d'adresse NAT (210) à l'ordinateur multimédia interne (220) ;
e) l'envoi d'un paquet de données (260) avec des données de protocole Voice-over-IP qui contiennent comme adresse Voice-over-IP la préadresse NAT (251) par l'ordinateur multimédia interne (220) à l'hôte NAT (200) ;
f) le remplacement d'une indication d'origine (270) dans l'en-tête du paquet de données (260) qui contient l'adresse IP de l'ordinateur multimédia interne (220) par l'hôte NAT par la préadresse NAT (251) attribuée ;
g) la transmission du paquet de données par l'hôte NAT (200) à un ordinateur adressé en externe (230) ;
h) la réception d'un paquet de données (261) avec la préadresse NAT (251) de l'ordinateur adressé en externe (230) par l'hôte NAT (200) ;
i) l'interrogation du jeu de données d'attribution actuel par l'hôte NAT (200) par rapport au serveur d'adresse NAT (210) ;
j) le remplacement d'une indication de destination (271) dans l'en-tête du paquet de données (header IP, en-tête IP) (261) qui contient la préadresse NAT (251) par l'adresse IP attribuée (250) de l'ordinateur multimédia interne (220) en utilisant le jeu de données d'attribution actuel par l'hôte NAT (200).
k) la transmission du paquet de données (261) par l'hôte NAT (200) à l'ordinateur multimédia adressé en interne (220).

2. Procédé selon la revendication 1,
**caractérisé par** l'utilisation de protocoles standardisés, en particulier SIP ou H.323, pour la transmission de paquets de données vocales, audio et/ou vidéo par des liaisons réseaux (240, 241, 242, 243).

3. Agencement avec un hôte NAT (200), un ordinateur multimédia interne (220) et un serveur d'adresse NAT (210) pour la réalisation du procédé selon la revendication 1 ou 2.

4. Agencement selon la revendication 3,
**caractérisé en ce que** le serveur d'adresse NAT (210) tourne conjointement avec l'hôte NAT (200) sur un ordinateur commun.
